# EUROPEAN PATENT APPLICATION

(11) **EP 1 705 165 A1**
(43) Date of publication of application: **27.09.2006**
(21) Application number: 05425178.0
(22) Date of filing: 25.03.2005
(51) Int. Cl.: C04B 14/22, C04B 28/02, C03C 13/00

(54) **Cement-based material and process for the preparation of said material**

(71) Applicant: I.C.R.S. Industrial Ceramic Reinforcement Solution S.r.L., 20122 Milano (IT)
(72) Inventor: Giuliani, Giacinto, Dr., 16035 Rapallo (IT)
(74) Representative: Lunati, Vittoriano

(57) **Abstract**

A cement-based material (1) is proposed, wherein the aggregate material (3) comprises alkali-resistant glass grit (5) in dimensions coming between 0.01 mm and 2.6 mm, said glass grit (5) being obtained by crushing AR glass elements and accounting for at least the major proportion of a powdered aggregate (3a), with granules having maximum dimensions of less than 0.5 mm and provided in quantities by weight comparable with or greater than the quantity by weight of the cement (2). The preparation of the material (1) includes a stage for crushing AR glass elements in a disk-type crusher and a subsequent grading stage to separate the various particle sizes of the aggregate materials (3).

## Description

This invention relates to a cement-based material and a process for preparing said material, as specified in the preamble of the independent claims.

It is common knowledge that cement-based materials, or cement mixtures, including concrete and the like, are the materials most used in the building sector to manufacture products of various types and functions including the structural frameworks for buildings, bridges, foundations, piles, dams, walls, and so on.

The success of these materials in building structures is due to their known advantages, i.e. a good compressive strength, adequate resistance to high temperatures, the great and easy manageability of the materials in question, and above all the very low costs of the raw materials.

As we know, cement-based materials or concretes, are made of cement which, mixed with water, to constitute the binder for the aggregates, which may include sand, gravel or crushed rock.

Cement-based materials are made by mixing the above-mentioned components to constitute a plastic material that begins to harden, if exposed to air, within 1-2 hours and achieves 70-90% of its final strength after the first 28 days, and its full strength after 6-12 months.

Various admixtures can be added to the mixture to give the material particular characteristics.

Making concrete products consequently simply involves placing the cement-based material in formwork or the like and waiting for it to harden partially. This operation is facilitated if these materials are highly plastic before they harden, a characteristic that is consequently much appreciated.

Steel or other reinforcement may also be embedded in the structures to make the product even stronger.

Products made with cement mixtures are very frequently required to withstand high structural loads induced by the self weight of the constructions in which they are used as well as the other loads brought to bear thereon.

Given their properties and low cost, they are often used in constructions that may be submitted, accidentally or otherwise, to high temperatures and exposed to flames.

Given these premises, concretes or like materials with a high mechanical strength and temperature resistance are always appreciated.

For structural and aesthetic reasons, moreover, a smooth surface finish on products made with cement-based materials is also appreciated. In fact, it is well known that surface irregularities are places where the stresses reach their maximum values and, as such, they act as trigger points for the onset cracks or the like. Hence the fundamental importance of reduce such surface irregularities to a minimum.

Known cement-based materials present certain important drawbacks.

First of all, there is the fact that they do not always have an adequate mechanical strength.

In fact, their mechanical strength is often reduced by the presence of aggregate materials that are not sufficiently strong, or homogeneous, or that include different materials with different strengths.

This is due to the mineral origin of the materials in question, which cannot guarantee structural homogeneity.

Very often, in fact, the sand also contains impurities such as clay, sodium chloride, and so on, that constitute weak points in the products made with the cement-based material.

To improve the strength of the material, the aggregates would need to be carefully selected to eliminate any such impurities, but such an aggregate selection process would involve a considerable increase in the production costs and a consequent increase in the cost of the material itself, thus reducing the main advantage of the material in question.

A further drawback of cement-based materials that reduces their mechanical strength lies in the presence of porosities inside the material itself. These porosities can develop for various reasons, including a scarce plasticity of the cement-based material after it has been mixed and before it has hardened.

The plasticity of the material is also a desirable, but often lacking feature in itself because it enables the preparation of products of limited thickness, or of complex and particular shape.

Said plasticity can be increased simply by adding water to the mixture, but this gives rise to other important drawbacks.

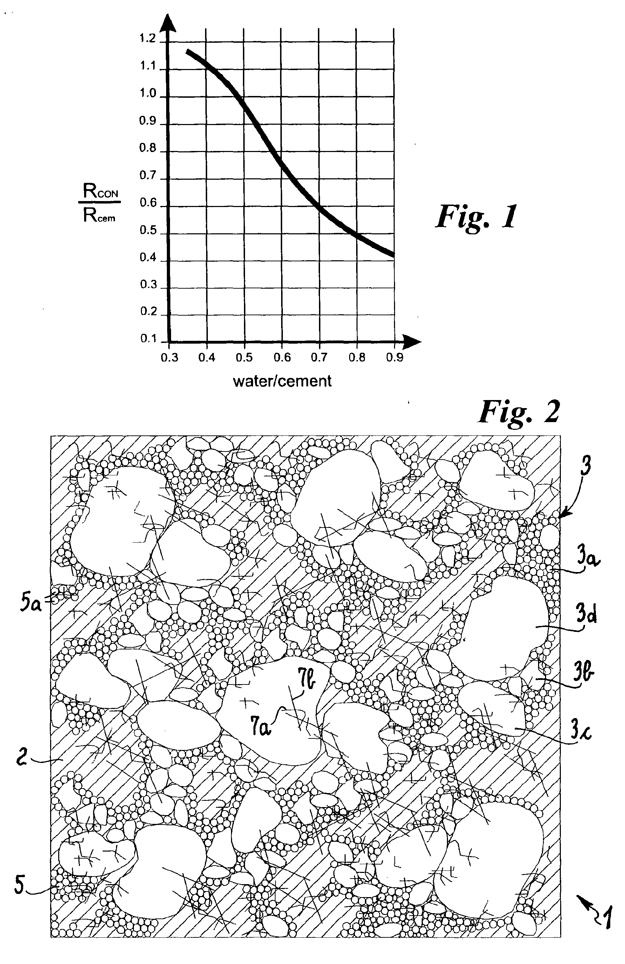

In fact, though it improves the plasticity of the cement, the addition of water is known to have a considerable negative fallout on the mechanical strength of the concrete. The graph in Fig. 1 shows the strength of a cement-based material by comparison with the strength of the cement alone, in relation to the ratio between the quantity of water and the quantity of cement.

Despite this important drawback, water is usually added to the cement in abundance and the ratio between the quantity of water and the quantity of cement (or water/cement ratio) in the concrete varies from an optimal value of 0.3 to a value of approximately 0.7, which approximately halves the mechanical strength of the concrete.

To overcome this drawback, plasticizing admixtures are often added to the cement in more or less sizable proportions.

Plasticizing admixtures do not have the disadvantages of water and they guarantee the cement a greater workability, but they often present drawbacks from the point of view of flame resistance.

In fact, plasticizing admixtures are often derived from hydrocarbons, which are known to feed a fire and consequently negatively affect the flame resistance of the cement-based material.

A rise in the temperature inside a product made with the cement-based material can have important drawbacks. In fact, high temperatures cause the water existing in the form of humidity in the material, and in the cement in particular, which can cause the product to explode.

Another disadvantage lies in the fact that cement-based material products have surfaces with a rough finish due to the very nature of the material, and this gives rise to the previously-mentioned aesthetic and mechanical drawbacks.

In this situation, the technical aim lying behind the invention is to conceive a cement-based material and a process for its preparation capable of substantially overcoming the above-mentioned drawbacks.

In the context of said technical aim, an important object of the invention is to conceive a cement-based material of great mechanical strength.

Another object of the invention is to conceive a cement-based material that, despite its high mechanical strength, it is also features low costs.

A further object of the invention is to produce a cement-based material capable of withstanding high temperatures.

Yet another object of the invention is to produce a cement-based material that can present a high surface finish.

The technical aims and the specified objects are achieved by a cement-based material and by a process for its preparation as claimed in the independent claims. Preferred embodiments are illustrated in the dependent claims.

Further characteristics and the advantages of the invention are better explained below, in the detailed description of a preferred embodiment of the invention, with reference to the attached drawings, wherein:
**Fig. 1** shows a graph illustrating the relationship between the cement-based material's strength and the cement's strength on the y-axis and the water/cement ratio on the x-axis;
**Fig. 2** schematically represents an enlargement of the material in question;
**Fig. 3** shows a graph of the results of a slump test on a vibrating table conducted on a normal concrete and on the cement-based material made according to the invention, indicating the number of shocks on the y-axis and the slump, i.e. the height reduction in the material in mm, on the x-axis; and
**Fig. 4** is a block diagram illustrating the components of the material in question.

With reference to the above-mentioned figures, the material according to the invention is globally indicated by the numeral **1.**

Briefly, the components of the cement-based material 1 include at least cement **2,** aggregate material **3** and water **4.**

Said aggregate material 3 comprises a powdered aggregate **3a,** the maximum dimensions of which are less than 0.5 mm, composed mainly of glass grit **5,** in the form of granules of alkali-resistant (AR) glass **5a.**

The aggregate material 3 is also preferably composed of further amounts of aggregate of different dimensions, distinguishable as: fine aggregate **3b,** substantially composed of sand with dimensions larger than the powdered aggregate 3a, coarse aggregate **3d,** with dimensions larger than said fine aggregate 3b; and there is preferably also some medium aggregate **3c,** having dimensions smaller than the course aggregate 3d and larger than the fine aggregate 3b.

In detail, the dimensions of the powdered aggregate 3a come between 0.01 mm and 0.5 mm, and are consequently very similar to the dimensions of the particles in the cement 2, which is of known type. In fact, said particles of cement 2 usually have diameters coming between 0.01 mm and 0.20 mm. This feature, i.e. the presence of powdered aggregate 3a, makes the dimensions of the aggregate more consistent with the dimensions of the cement. This reduces the porosity developing in the cement-based material 1, thereby improving its mechanical characteristics.

The dimensions of the other aggregates can vary: preferably, the fine aggregate will have dimensions coming between 0.5 mm and 1 mm, the medium aggregate will have dimensions coming between 1.3 mm and 2.8 mm, and the coarse aggregate will have dimensions coming between 4 mm and 8 mm.

The quantities by weight of the different aggregates 3 can also vary, but it is advisable to maintain high quantities of powdered aggregate 3a, that are always added in proportions greater than 10% by weight of the total weight of said aggregate material 3 and preferably in quantities comparable with or greater than the quantities of the cement 2.

Preferably, the fine aggregate 3b will be present in similar quantities by weight to the powdered aggregate 3a, while the coarse aggregate 3d will be present in larger quantities by weight than the quantities by weight of the powdered aggregate 3a. Finally, the medium aggregate 3c will be present in smaller quantities by weight than the quantities by weight of said powdered aggregate 3a.

As mentioned previously, the powdered aggregate 3a is composed mainly of glass grit 5.

Said AR glass grit has dimensions smaller than 2.6 mm, and preferably coming between 0.01 mm and 2.6 mm.

The glass grit 5 preferably accounts for the total amount of the powdered aggregate 3a. Said grit 5 may also constitute the fine aggregate 3b and the medium aggregate 3c.

Said grit 5 is composed of alkali-resistant glass granules 5a, obtained by crushing elements of alkali-resistant glass, a material that is also obtainable from processing waste and consequently has a very low cost.

The granules 5a of AR glass are preferably composed of glass with a high zirconium oxide *ZrO*_{*2*} content, capable of withstanding alkaline substances. They are consequently composed of a material with very high mechanical strength and capable of resisting high temperatures.

The known chemical characteristic of alkali resistance makes the grit 5 chemically compatible with the cement-based material.

The aggregate 3 comprising the AR glass grit 5 has constant physical and mechanical properties, i.e. its properties do not vary from one granule to another, whereas conventional aggregates composed of sand, gravel or the like, have an intrinsic lack of homogeneity natural to the aggregate material, which can have a negative effect on the strength of the cement-based material 1.

Moreover, the granules 5a have a very angular shape, due particularly to the brittle type of rupture mechanism, occurring during their crushing and characteristic of vitreous materials.

This angular shape of the granules 5a enables a more stable binding of the granules to the cement 2 and consequently a better performance of the cement.

Thanks to the above-described characteristics, the aggregate 3 composed of grit 5 enables a further reduction in the gaps and porosities in the concrete, thus enabling an improvement in the mechanical characteristics and a corresponding increase in the density of the cement-based material 1.

Another feature of the grit 5 is that it possesses a considerable sliding capacity and it consequently improves the plastic consistency of the cement-based material 1 before it hardens.

In fact, this sliding capacity of the aggregate is due to the minimal roughness characterizing the surfaces of the aggregate, not to the macroscopic shape of the aggregate granules.

In this sense, some aggregate materials 3 can have an angular and irregular shape, suitable for binding with the cement 2, but nonetheless have smooth surfaces, i.e. with a very limited surface roughness, which adds considerably to the sliding capacity of the aggregate 3 and consequently assures a greater plasticity of the cement-based material 1. This is the case of the glass grit 5, which has numerous particularly smooth outer surfaces, due to the brittle mechanism of rupture.

The above-described characteristics have been empirically demonstrated by conducting a known test named "a slump test conducted on a vibrating table".

Said test consists in filling a form of a specific height with cement-based material still in the plastic state and submitting said form to a set number of shocks, so as to compact the material inside the form.

Then the sides of the form are removed and the cement-based material, which has not yet hardened, settles on the table, thus becoming lower.

Said height reduction, or slump, in the material is proportional to its plasticity.

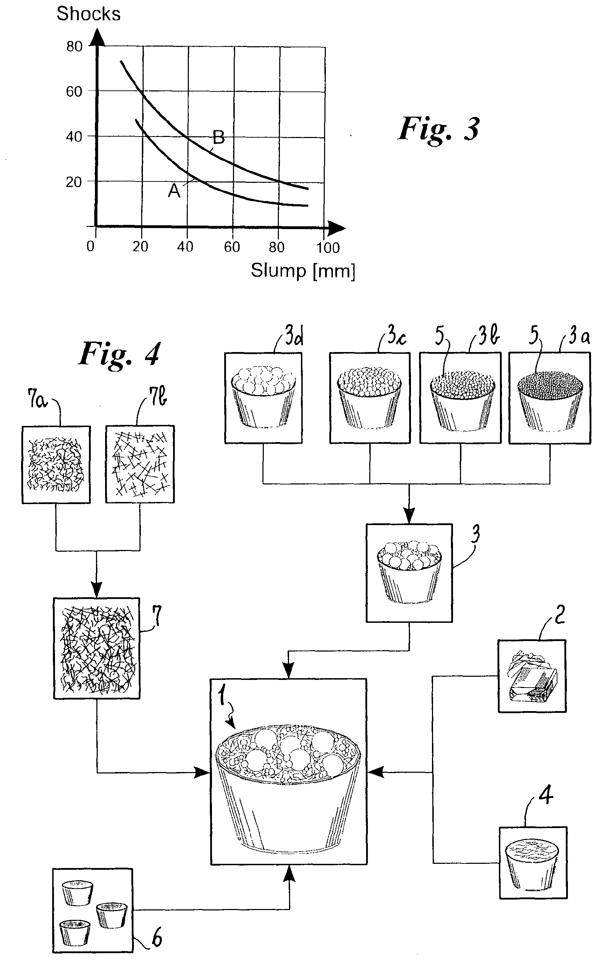

The results are illustrated in Fig. 3, which shows the greater plasticity of the cement-based material 1 made according to the invention, for which the results are interpolated by the curve **A,** by comparison with a standard concrete, for which the results are interpolated by the curve **B.** In fact, the slump, and consequently also the plasticity, of the former is greater than that of the latter, whatever the number of compacting shocks applied.

Clearly, the greater the number of shocks coming to bear on the form, the greater the compaction of the material and the lesser its plasticity.

The material 1 may also include admixtures **6,** which can be used for various purposes, including that of improving the plasticity of the material 1.

### EXAMPLE

The following is an example of the components comprising a cement-based material 1.

One m³ of material 1 includes the components indicated in the table below.

| | DIMENSIONS [mm] | | WEIGHT [kg] | W/W CEMENT x 100 |
|---|---|---|---|---|
| | min | max | | |
| Powdered aggregate (3a) - AR glass grit (5) | 0.20 | 0.35 | 422.20 | 105.550% |
| Fine aggregate (3b) - Sand | 0.60 | 0.80 | 422.20 | 105.550% |
| Medium aggregate (3c) - Sand | 1.50 | 2.50 | 211.10 | 52.775% |
| Coarse aggregate (3d) - Gravel | 4.00 | 6.00 | 863.59 | 215.898% |
| TOTAL AGGREGATES (3) | | | 1,919.09 | 479.773% |
| CEMENT (2) | | | 400.00 | 100.000% |
| WATER (4) | | | 90.00 | 22.500% |
| ADMIXTURES (6) | | | 1.32 | 0.330% |
| FIBERS (7) | | | 24.00 | 6.000% |
| TOTAL | | | 2,432.41 | 608.103% |

In this example, the powdered aggregate 3a is composed entirely of glass grit 5.

Said material 1 consequently has a density of 2.43 kg/dm³.

Moreover, said cement-based material 1 has a particularly low water/cement ratio, even lower than the theoretical 0.3, amounting to 0.225, which means that the material 1 has a greater strength than that of the cement alone.

The cement-based material 1 also preferably includes a micro-reinforcement composed of fibers **7** with a high tensile strength.

Said fibers can be made of polypropylene **7a,** alkali-resistant glass fibers **7b** or, better still, a fabric comprising a combination of the two types of fiber 7a and 7b.

The invention includes a new process for preparing the cement-based material 1 and the incorporated aggregate materials 3.

Said process includes a stage for preparing the aggregate materials 3, by means of a crushing and consequent comminution or pulverization of alkali-resistant glass elements suitable for producing aggregates with maximum dimensions smaller than 0.5 mm.

Said crushing is consequently very thorough and demands of the use of specific crushing methods, and preferably disk-type crushers.

In fact, disk crushers contain two parallel disks, the two sides of which that face each other are scored or ribbed in various shapes. These disks are turned one against the other.

The material 3 is fed by suitable feeding means through the middle of the disks and thrust by means of the centrifugal force towards the outer edges of the disks, being crushed between said scoring or ribbing and then unloaded on the outside.

Said disk-type crushers achieve the required comminution or pulverization of the glass.

This crushing stage is preferably followed by a stage for grading the aggregate material 3.

This material grading is achieved by means of suitable sieving processs. Each sieving process is conveniently achieved by means of several sieves with a different mesh fineness used in series so as to grade the aggregate materials 3 according to their different dimensions.

The aggregate with excessively large dimensions even after crushing is sent back to the crushing stage, while the suitable material is packaged in specific sacks, distinguished according to the aggregate's dimensions and used for the preparation of the cement-based material 1 as previously described.

This invention offers several important advantages.

The material 1 has a greater mechanical strength.

In fact, the grit 5 enables a considerable reduction in the quantities of water 4 and plasticizing admixtures 6 added to the cement 2, while maintaining the same plasticity of the cement-based material 1.

Thanks to the grit 5 it is also possible, without interfering with the plasticity of the material 1, to completely omit the plasticizing additives 6 and still maintain a water/cement ratio very close to the ideal value, which is 0.3.

Alternatively, again thanks to the presence of the grit 5, it is possible to add smaller amounts of plasticizing admixtures 6 and to reduce the water/cement ratio even to below the ideal value, thus assuring the material 1 an exceptionally high strength.

Moreover, the glass grit 5 has a very high hardness and mechanical strength, particularly in relation to compressive loads, and partially confers said properties to the material 1.

The grit 5 also has a homogeneous composition: all the granules 5a are composed of exactly the same material and the grit 5 contains no different types of material or impurities, as is often the case with the crushed rock materials commonly used as aggregate for making concrete and similar products.

A further advantage stems from the much more limited quantity of gaps and porosities occurring in the material 1.

This characteristic further improves the mechanical properties of the material 1 and is due both to the grit 5, which is composed of angular particles that bind better to the cement 2, and to the sizing and weight of the aggregate materials 3.

In fact, the sizing of the aggregate materials 3 as described enables said materials to bond to the particles of cement 2, and ensures a better compacting of the aggregate itself: in fact, the smaller aggregate materials 3 can fill the gaps left by the larger aggregate materials 3. This compacting action can take effect even on the particle size of the cement 2.

There are consequently no longer any porosities with dimensions greater than those of said latter particles (10µm - 200µm), especially when the quantity of powdered aggregate 3a exceeds 10% of the total quantity of aggregate material 3.

The reduction in the porosities becomes evident on the outside of the product, which reveals a particularly smooth surface with no irregularities, thus ensuring better characteristics in both mechanical and aesthetic terms.

Any addition of the previously-mentioned fibers 7 further considerably increases the mechanical characteristics of the material.

The cement-based material 1 also has a better flame resistance.

In fact, the admixtures normally added to the mixture forming the material 1 can be considerably reduced, or eliminated altogether, thanks to the presence of the glass grit 5, which gives the mixture a more plastic consistency before it hardens, thanks to the previously-described mechanism.

A further advantage lies in the fact that the material 1 has a low production cost.

To prepare the powdered aggregate of homogeneous physical and mechanical characteristics, there is no need to undertake any lengthy and complex selection processs, such as would be necessary if sand or gravel were used. This simply involves a stage for crushing elements of alkali-resistant glass.

Using a disk-type crusher enables a very fine aggregate to be obtained.

Any subsequent grading stage is very straightforward and simply involves sieving the aggregate 3; this stage also enables aggregate 3 with accurately-graded dimensions to be obtained.

## Claims

**1.** Cement-based material of the type comprising aggregate material (3),
- **characterized in that** said aggregate material (3) comprises a powdered aggregate (3a), the maximum dimensions of which are less than 0.5 mm, in proportions amounting to more than 10% of said aggregate material (3), and **in that** said powdered aggregate is at least mainly composed of glass grit (5) in the form of alkali-resistant glass granules (5a).

**2.** Cement-based material as in claim 1, wherein said powdered aggregate (3a) is composed entirely of said glass grit (5).

**3.** Cement-based material as in claim 2, wherein said material (1) comprises cement (2), and wherein said powdered aggregate (3a) is contained in quantities by weight similar to or greater than the quantities by weight of said cement (2).

**4.** Cement-based material as in claim 1, wherein said aggregate material (3) also includes fine aggregate (3b) with dimensions coming between 0.5 mm and 1 mm, and wherein said fine aggregate (3b) is at least partially composed of said glass grit (5).

**5.** Cement-based material as in claim 1, wherein said aggregate material (3) also includes: fine aggregate (3b), with dimensions greater than said powdered aggregate (3a) in quantities by weight comparable with the quantities by weight of said powdered aggregate (3a); medium aggregate (3c) with dimensions greater than said fine aggregate (3b) in smaller quantities by weight than said powdered aggregate (3a); and coarse aggregate (3d) with dimensions greater than said medium aggregate (3c) in quantities by weight greater than said powdered aggregate (3a).

**6.** Cement-based material as in claim 5, wherein said fine aggregate (3b) has dimensions coming between 0.5 mm and 1 5 mm, said medium aggregate (3c) has dimensions coming between 1.3 mm and 2.8 mm, and said coarse aggregate (3d) has dimensions coming between 4 mm and 8 mm.

**8.** Cement-based material as in claim 1, including a tensile stress-resistant fiber micro-reinforcement (7), composed of a combination of polypropylene fibers (7a) and alkali-resistant glass fibers (7b).

**9.** Process for the preparation of a cement-based material, of the type including aggregate materials (3), **characterized in that** it includes a stage for preparing said aggregate material (3) consisting in the crushing of alkali-resistant glass elements, said crushing being done so as to obtain a fine comminution to a particle size of less than 0.5 mm.

**10.** Process for preparing a cement-based material as in claim 9, wherein said crushing stage is conducted by means of a disk-type crusher.

**11.** Process for preparing a cement-based material as in claim 9, including a stage for grading said aggregate materials (3) after said crushing stage.
